(19)

Europäisches
Patentamt
European
Patent Office
Office européen
des brevets

(11) **EP 2 061 248 A1**

(12) **EUROPEAN PATENT APPLICATION**

(43) Date of publication:
   **20.05.2009 Bulletin 2009/21**

(51) Int Cl.:
   *H04N 7/26* *(2006.01)*      *H04N 7/36* *(2006.01)*

(21) Application number: **07120604.9**

(22) Date of filing: **13.11.2007**

(84) Designated Contracting States:
   **AT BE BG CH CY CZ DE DK EE ES FI FR GB GR HU IE IS IT LI LT LU LV MC MT NL PL PT RO SE SI SK TR**
   Designated Extension States:
   **AL BA HR MK RS**

(71) Applicants:
   • **IBBT vzw**
     **9050 Gent (BE)**
   • **VRIJE UNIVERSITEIT BRUSSEL**
     **1050 Brussel (BE)**

(72) Inventors:
   • **Clerckx, Tom**
     **Overijse 3090 (BE)**
   • **Munteanu, Adrian**
     **Watermaal-Bosvoorde 1170 (BE)**

(74) Representative: **Plas, Axel Ivo Michel et al**
   **BiiP cvba**
   **Culliganlaan 1B**
   **1831 Diegem (Brussels) (BE)**

(54)   **Motion estimation and compensation process and device**

(57)   In the motion estimation and compensation process for video frames, blocks O of pixels are considered. A number k of bit planes in a block O in a video frame F are compared with blocks $O^R$ in reference frames ($F^R$). The best matching block ($O^{RM}$) is determined in the reference frames ($F^R$). Subsequently, a weight value ($W_x^{ij}$) is calculated for the best matching block ($O^{RM}$) based on the ratio of valid pixels therein. The residual pixel values ($V_x^{ij}$) extracted from the best matching block ($O^{RM}$) and corresponding weight values ($W_x^{ij}$) are stored in a pixel prediction array (120). The pixel array is used for motion compensation of at least the luminance component of valid pixels. Invalid pixels are reconstructed from surrounding pixel values.

Fig. 1

EP 2 061 248 A1

**Description**

**Field of the Invention**

The present invention generally relates to video encoding and decoding, more particularly to motion estimation and compensation. Encoding/decoding digital video typically exploits the temporal redundancy between successive images: consecutive images have similar content because they are usually the result of relatively slow camera movements combined with the movement of some objects in the observed scene. The process of quantifying the motion or movement of a block of pixels in a video frame is called motion estimation. The process of predicting pixels in a frame by translating - according to the estimated motion - sets of pixels (e.g. blocks) originating from a set of reference pictures is called motion compensation.

**Background of the Invention**

In IEEE Transactions on Image Processing, Vol. 3, No. 5 of September 1994, the authors Michael T. Orchard and Gary J. Sullivan have described a motion compensation theory based on overlapped blocks in their article entitled "Overlapped Block Motion Compensation: An Estimation-Theoretic Approach". Overlapped Block Motion Compensation (OBMC) as described therein, predicts the current video frame by repositioning overlapping blocks of pixels from the previous frame, each weighted by some smooth window. In addition, Orchard and Sullivan present an overlapped block based motion estimation technique that provides the decoder with information further optimizing the performance of its prediction. The proposed motion estimation process requires involvement of the encoder and decoder, and it is a complex, iterative process.

It is an objective of the present invention to overcome the drawbacks of the known motion estimation and compensation technique based on overlapped blocks. More particularly, it is an objective to provide a motion estimation and compensation process that does not require a feedback loop, and can be used as a post-processing tool at the decoder side only, hence reducing the encoder complexity. It is a further objective of the present invention to disclose a motion estimation and compensation process that is pixel-based, that is scalable, and consequently allows for large Group of Picture (GOP) lengths in digital video coding, and which optionally enables to trade-off between complexity and decoding quality.

**Summary of the Invention**

According to the present invention the shortcomings of the prior art are resolved and the above defined objectives are realized through the motion estimation and compensation process for at least the luminance component of a pixel in a video frame F defined by claim 1. This motion estimation and compensation process comprises the steps of:

A. comparing an integer number k bit planes for blocks O of pixels including that pixel with blocks OR in at least one reference frame $F^R$; and
B. for each block O and each reference frame $F^R$:

B1. determining according to a matching criterion a best matching block $O^{RM}$ in the reference frame $F^R$;
B2. determining a weight value $W_x^{ij}$ for the best matching block $O^{RM}$ based on the ratio of valid pixels in the best matching block $O^{RM}$;
B3. extracting a residual pixel value $V_x^{ij}$ for the pixel from the best matching block $O^{RM}$; and
B4. storing the weight value $W_x^{ij}$ and the residual pixel value $V_x^{ij}$ in a pixel prediction array; and

C. either of:

C1. motion compensating by determining at least residual bit planes of the luminance component from weight values $W_X^{ij}$ and residual pixel values $V_x^{ij}$ in the pixel prediction array in case the pixel is a valid pixel; or
C2. reconstructing the luminance component from surrounding pixel values in case the pixel is an invalid pixel.

Thus, the process according to the present invention is pixel-based and generates an array of predictors for the residual pixel, or at least the residual luminance data, as soon as k bit planes of the video frame have been decoded. The candidate residuals for a pixel are extracted from the corresponding pixels in the best matching blocks found in one or more reference frames, i.e. previously decoded frames. For each candidate residual, an associated weight is determined. The associated weight is a measure for the extent to which the k bit planes in the block of the current video frame match with the corresponding k bit planes in the best matching block of the reference frame. Thereto, the present invention introduces the notion of (a) valid pixels, i.e. pixels in the best matching block whose first k bits depending on the validity criterion either match with the first k bits of the corresponding pixel in the block or partially match with those k bits, and (b) invalid pixels, i.e. pixels for which the validity criterion is not satisfied. Should a block partially fall outside the video frame boundaries, the frame may be extended at the borders in order to allow for determining the best matching block and the corresponding weight.

The predictors and their corresponding weights are combined in the motion compensation step to determine the residual bit planes of the pixel, or at least its luminance component, in case the pixel is a valid pixel. Several combinations are possible.

In case of an invalid pixel, i.e. a pixel for which the array of residual pixel predictors and weights remains empty, the pixel is reconstructed entirely from the surrounding valid pixels. Again, several combinations are possible. It is noted that in this case, also the k received bit planes may be recalculated.

The present invention provides a post-processing tool which can be executed entirely at the decoder side, at both encoder and decoder side, or as a separate post-processing tool not necessarily related to video coding. Compared to the prior art, the motion estimation and compensation process of the current invention substantially reduces the encoder complexity as both the estimation and compensation can take place at the decoder. The process according to the current invention has no feedback loops as a consequence of which it is not iterative. A direct advantage thereof is its increased scalability. The process also uses pixel-based motion compensation, whereas prior art refers to block-based motion compensation. An additional advantage resulting thereof is its ability to handle larger Group of Picture (GOP) lengths. A GOP is a sequence of video frames which are dependent and therefore need to be decoded together. Thanks to its pixel-based nature, the process according to the present invention does not introduce blocking artefacts, and errors do not propagate through a GOP.

In addition to the motion estimation and compensation process defined by claim 1, the current invention also relates to a corresponding motion estimation and compensation device as defined by claim 19. Such device comprises:

means for comparing an integer number k bit planes for blocks O of pixels including that pixel with blocks OR in at least one reference frame $F^R$;

means for determining for each block O and each reference frame $F^R$ according to a matching criterion a best matching block $O^{RM}$ in the reference frame ($F^R$);

means for determining a weight value $W_x^{ij}$ for the best matching block $O^{RM}$ based on the ratio of valid pixels in the best matching block $O^{RM}$;

means for extracting a residual pixel value $V_x^{ij}$ for that pixel from the best matching block $O^{RM}$;

means for storing the weight value $W_x^{ij}$ and the residual pixel value $V_x^{ij}$ in a pixel prediction array;

motion compensating means for determining at least residual bit planes of the luminance component from weight values $W_x^{ij}$ and residual pixel values $V_x^{ij}$ in the pixel prediction array, in case that pixel is a valid pixel; and

means for reconstructing the luminance component from surrounding pixel values in case the pixel is an invalid pixel.

Optionally, as defined by claim 2, the step of comparing is restricted to blocks within a predefined search range in a reference frame.

Indeed, for a block taken in the current frame at positions (i, j) where i and j respectively denote the row and column indexes of the starting position of the block within the frame, the search for the best matching block within a reference frame, may for instance be restricted to blocks with starting position between the position (i-sr, j-sr) and position (i+sr, j+sr), sr representing the search range.

It is further noticed that the origins of the blocks can be located on an integer or sub-pixel grid in case of sub-pixel motion estimation. The search range sr in other words not necessarily needs to be an integer value; also, the search range needs not necessarily be symmetric around position (i, j).

It is also noticed that the search range may be predetermined, or alternatively may be adaptive. In case the blocks have a non-square shape, e.g. rectangular, circular or oval, the search range may comprise multiple values, or may represent a distance or measure other than the relative origin position.

Also optionally, as defined by claim 3, the matching criterion may comprise minimizing the number of bit errors on the integer number k bit planes between the block in the video frame and blocks in the reference frame.

In other words, to determine the best matching block in a reference frame, the k most significant bit planes may be considered. The matching criterion may then look for the block in the reference frame that has most pixels whose k most significant bits correspond to the k most significant bits of the corresponding pixel in the block under consideration in the current frame.

Obviously, there exist alternative matching criteria such as bit error counting on the most significant bit plane, bit error counting in a number of bit planes smaller than or equal to k, etc.

Also optionally, as defined by claim 4, a pixel may be considered a valid pixel in case the integer number k bit planes are identical in the block and the best matching block.

Thus, only pixels with identical first k bit planes in the block and the best matching block will get a residual pixel value and associated weight stored in their pixel predictor array.

Alternatively, as indicated by claim 5, a pixel may be considered a valid pixel in case at least one bit of the first k bits in block O is identical to a corresponding pixel in the best matching block.

Thus, the validation criterion may be relaxed and pixels which only partially correspond to the corresponding pixel in the best matching block may be considered valid. The partial correspondence may for instance require that at least one bit is identical, or that at least z bits are identical, z being an integer number smaller than k. For instance, in case where k=3, a pixel may be considered valid when 2 or 3 bits are identical and may be considered invalid when no or 1 bit is identical. The validation criterion further may or may not specify which bits have to be identical. For instance, in case at least one bit has to be identical, the validation criterion may require that at least the most significant bit (MSB) corresponds.

As will be explained later on, the validation requirement also may be relaxed as an alternative to reconstruction of invalid pixels.

Still optionally, as defined by claim 6, the blocks in the video frame and the blocks in the at least one reference frame may have a square shape with block size B, B representing an integer number of pixels selected as a trade-off between block matching confidence and accuracy of the estimation and compensation process.

Indeed, although other block shapes like for instance rectangular blocks may be considered, square blocks seem to be the most straightforward choice. The size B of such square blocks must not be too small to avoid compromising the confidence in or fidelity of the matching criterion. In case the block size B would be 1 for instance, matching blocks would be found in any reference frame at many random locations. On the other hand, the block size is upper-bounded, because a large block size compromises the accuracy of the estimation.

As defined by claim 7, the motion estimation and compensation process according to the present invention further optionally comprises the step of:

D. either of:

D1. motion compensating by determining also the chrominance component from weight values and residual pixel values in the pixel prediction array in case the pixel is a valid pixel; or
D2. reconstructing the chrominance component from surrounding pixel values in case the pixel is an invalid pixel.

Indeed, the motion estimation and compensation process according to the present invention may be applied for the luminance component, as already indicated above. The chrominance component however may follow the weights and predictor locations from the luminance component, but on all bit planes instead of on a subset of residual bit planes as is the case with the luminance component.

Optionally, as defined by claim 8, the step of motion compensating may comprise:

- binning the residual pixel values;
- determining bin weight values; and
- determining the luminance component to be the weighted average of residual pixel values in the bin with highest bin weight value.

Motion compensation based on binning tries to maximize the probability of the residual pixel value to fall within certain boundaries. The entire range of residual values is divided into a set of equally large bins. Thereafter, the residual pixel values in the pixel predictor array are assigned to the respective bins. The bin weight is calculated as the sum of pixel predictor weights associated with the pixel predictor values assigned to the respective bin. At last, the residual pixel value is calculated taking into account only those residual pixel values and corresponding weights that belong to the bin with highest bin weight.

It is noted that binning with only one bin comes down to weighted averaging the values in the pixel predictor array.

It is further noted that although an implementation with equally large bins has been suggested here above, the present invention obviously is not restricted thereto. Binning based on bins with different sizes could be considered as well.

Alternatively, as defined by claim 9, the step of motion compensating may comprise:

- clustering of residual pixel values and associated weight values based on distance to a centre-of-mass.

Clustering relies on the fact that the residual pixel predictors tend to concentrate their weights around certain locations in the reference frames. This indicates the existence of a virtual centre-of-mass which is close to the location in the reference frames that corresponds to the real displacement for the pixel under consideration. An additional selection of the residual pixel predictors can now be applied by forcing the valid pixels to fall within a circle with the centre coinciding with the centre-of-mass and radius r. Since the centre-of-mass is assumed to be close to the real motion compensated pixel, the weights could be adapted according to the proximity of the centre-of-mass. In addition, a multiplication factor $\alpha$, with $0 \leq \alpha \leq 1$, can be used in order to indicate how much the original pixel weights should be trusted compared to the proximity weight which is multiplied by the complementary factor $1-\alpha$. At last, the residual pixel value can be calculated as a weighted sum of the valid pixels combining the original pixel weights and the proximity weights.

It is noticed that the centre-of-mass can be defined for every reference frame.

It is further noticed that, as an alternative, one could choose to reconstruct the final pixel residual as the reconstructed pixel residual in the reference frame with the highest total weight.

Yet another alternative, defined by claim 10, implies that the said step of motion compensating comprises:

- clustering of residual pixel values and associated weight values based on distance to a centre-of-mass; and
- binning a selection of residual pixel values;
- determining bin weight values; and
- determining at least the luminance component to be the weighted average of residual pixel values in the bin with highest bin weight value.

Binning and clustering indeed can be combined. For example, one could start by selecting the pixels within a certain radius around the centre-of-mass. Subsequently, the resulting array of residual pixel value and associated weights are sorted and the maximal number of candidate predictors may be selected, as will be further described below. The leftover residual pixel values and weights are used to calculate the residual pixel value using the binning method.

Further optionally, as is indicated by claim 11, the residual pixel values whose corresponding weight value is smaller than a predefined threshold may not be considered for binning or clustering.

Indeed, through thresholding, an additional selection may be applied to the contents of the pixel predictor array. Residual pixel predictors whose associated weight is smaller than a predefined threshold T, T being a value between 0 and 1, may not be considered in the motion compensation step.

Also optionally, as defined by claim 12, the residual pixel values may be sorted according to decreasing corresponding weight value and only the first M residual values may be considered for binning or clustering, M being an integer number.

In other words, the residual pixel predictors may be sorted in decreasing order of their associated weights. Only the first M residual pixel predictors may be considered for the motion compensation step, while all other predictors may be discarded.

As is indicated by claim 13, the step of reconstructing may comprise:

- determining the luminance component to be the median of surrounding pixel values.

Thus, pixels which are invalid or at least the luminance component thereof, may be reconstructed by taking the median of the surrounding valid pixels.

It is noticed that the reconstruction step may be a multi-pass technique since some pixels may have no valid surrounding pixels. Therefore, the reconstruction may be iterated as long as invalid pixels are left.

Alternatively, as is indicated by claim 14, the step of reconstructing may comprise:

- determining the luminance component to be the mean of surrounding pixel values.

Instead of taking the median value of surrounding valid pixels, the mean value of surrounding valid pixels may serve to reconstruct invalid pixels. Equivalently to the median filtering, this is a multi-pass technique that has to be repeated iteratively as long as invalid pixels are left.

It is further noticed that as an alternative to reconstruction, a pixel may be considered a valid pixel in case a smaller number of bit planes are identical in the block and the best matching block.

Indeed, as already indicated above, the validation criterion can be relaxed for the invalid pixels. Instead of forcing k bits to be identical for the residual pixel to be valid, it is possible to assume that only k-q bits are known and select the residual pixel predictors for which k-q bits are identical in order to apply motion compensation instead of reconstruction. q is considered to be an integer value between 0 and k.

In the just described variant with relaxed validation criterion, the motion compensation phase has to reconstruct bpp-k+q bits instead of bpp-k bits, bpp representing the number of bits of the luminance component (or the entire pixel, depending on the implementation). This implies that q bits that were known as a result of the decoding process may have to be replaced by incorrect bits obtained from the compensation process.

Another remark is that the motion compensation step has to use all k known bits to calculate the weight of the residual pixel value since this will minimize the uncertainty on the location of the real compensated pixel.

As defined by claim 15, the at least one frame may comprise a first number of video frames and a second number of key frames.

For instance, in an implementation of distributed video coding with Wyner-Zyv frames, the reference frames may include the previously decoded Wyner-Zyv frame if there is one, and the key frames which precede and succeed the Wyner-Zyv frame.

It is noticed that applying motion estimation and compensation as formalized in the present invention can be applied on a subset of frames. Indeed, as any frame can be chosen as a reference, there is no dependency on previously decoded frames. This may be called frame-rate scalability.

Further optionally, as defined by claim 16, the bit planes may be sub-sampled.

Through sub-sampling the bit planes, the resolution may be adjusted; for instance, in the motion estimation process one can employ the most significant bit plane (MSB) at full resolution, the next MSB at half-resolution, and so on. This renders a complexity-scalable motion estimation and compensation process, wherein the complexity is controlled by the resolution with which the bit-planes are sub-sampled.

Yet another optional feature of the motion estimation and compensation process of the present invention, defined by claim 17, is that the integer number of bit planes may be adaptable.

By sending more or less bit planes of the frames to the decoder, the estimation and compensation process according to the invention may become more or less complex, in return for a quality increase or decrease.

As is indicated by claim 18, the motion estimation and compensation process according to the current invention has many applications such as for instance:

- video coding;
- distributed video coding;
- error concealment;
- frame interpolation;
- error resilience;
- multiple description coding; and
- predictive coding.

In general the current invention can be used in any video coding system applying motion estimation, whether it is encoder-side motion estimation or decoder-side motion estimation.

A first specific application is "Scalable Distributed Video Coding (SDVC)". This technology was originally designed with Distributed Video Coding (DVC) as an application in mind. DVC requires the motion estimation process to be applied at the decoder side. Based on the reception of a number of bit planes (or a part of these bit planes) of the luminance component and of some intra-coded frames, the method according to the present invention reconstructs an approximation of the missing bit planes of the luminance and chrominance components. Using the current invention has the advantage over other DVC techniques of supporting large Group of Picture (GOP) lengths as well as supporting good compression efficiency. In addition, using the current invention does not require any feedback between encoder and decoder. This reduces the inherent communication delays produced by the use of a feedback channel in current DVC systems. When the intra-coding part is performed by a scalable video coding system, the result is a fully scalable video coding system with additional opportunities for migration of the complexity to the decoder or to an intermediate node.

Another application is "error concealment". If parts of an image in a video sequence are damaged, they can be concealed using the method according to the present invention. The damaged parts have block-overlaps with correct parts in the image. Thus, block matching with the previous and or next frame can be applied with the correct areas to determine the block weights. The incorrect pixels are then reconstructed, using the current invention where all bit planes are considered unknown (and thus all predictors are valid). Alternatively, a local frame interpolation using the previous and the future frame can be applied, selecting a region around the corrupt areas.

Yet another application of the present invention is found in "frame interpolation". A frame can be interpolated in between two existing frames, by applying an altered scheme of the current invention. In this scheme, all pixels are considered valid. The array of predictors contains next to a set of weights, an origin, a destination, an origin-value and a destination-value. The origin and destination determine a motion vector, whereas the origin-value and destination-value are interpolated to find the interpolated-value. Following the motion vectors, the interpolated-values and weights are transferred into an array of weights and values in the interpolated frame. Reconstruction follows using the reconstruction methods that form part of the present invention.

A further application is "error resilience provision". In a system where the bit planes are encoded separately, the motion estimation and compensation technique that lies at the basis of the current invention provides high resilience against errors. If a bit plane is partially lost, concealment can be applied as described here above. If a bit plane is completely lost, frame interpolation can be applied as described here above. If an intra-frame is partially lost, concealment can be applied. If an intra-frame is completely lost, the decoder pretends a GOP-size of twice the original GOP-size.

The intra-frame can then be obtained using frame interpolation. Anyhow, the error does not propagate through a GOP. In the worst case, some pixel-based or global colour shadows may appear. In all cases, the available information is used in the motion estimation process to create reconstructed values (bits or full pixel values) and corresponding weights.

Yet another application where the current invention can be used advantageously is "multiple description coding". The current invention offers many new opportunities for multiple description coding. For example, one description can be given by bits at the even pixel positions of the first bit plane, while a second description is given by the bits at the odd pixel positions of the first bit plane. Block matching is then applied using the known bits only. The reconstruction method can be different for different pixels, as the number of known bits per pixel varies from position to position. The central description has knowledge of the first bit plane completely, thus the block matching fidelity as well as the reconstruction quality is expected to be higher than that of the side descriptions. One can think of many alternative ways of defining multiple descriptions based on sub-sampling and division of the bit planes among the descriptions.

Yet another application domain is "predictive coding". Since the current invention can be applied at the decoder side as well as on the encoder, it opens alternatives for the classical block-based motion estimation strategies. The following rate-distortion curves need to be computed and compared for every block: (a) predictive coding applying motion estimation, where coded motion vectors are sent, together with coded residual frames; (b) and predictive coding applying the method according to the present invention, where a coded (sub)set of bit planes is sent together with the coded residual frames (which are different from the residual frames for which classical motion estimation was used). The ensuing rate-distortion curves will indicate in the rate allocation process which of the two coding approaches needs to be adopted for every block.

**Brief Description of the Drawings**

Fig. 1 illustrates motion estimation in an embodiment of the process according to the present invention;
Fig. 2 illustrates motion compensation based on binning in an embodiment of the process according to the present invention; and
Fig. 3 illustrates an motion compensation based on clustering of predictors in an embodiment of the process according to the present invention; and
Fig. 4, Fig. 4a and Fig. 4b illustrate an example of the motion estimation and compensation process according to the present invention.

**Detailed Description of Embodiment(s)**

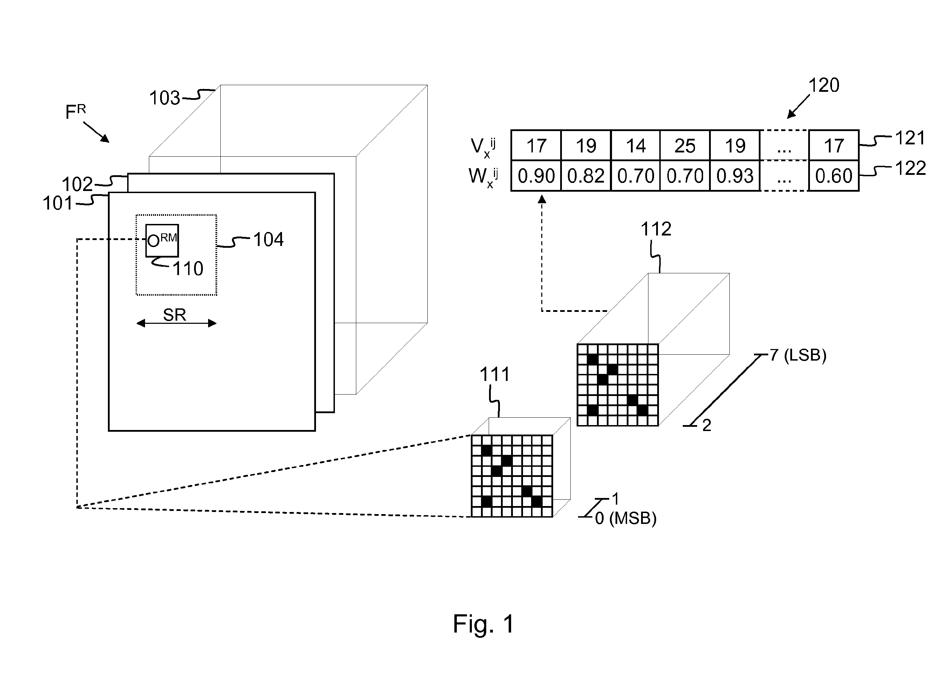

Fig. 1 illustrates motion estimation in a Wyner-Zyv decoder that is decoding a current Wyner-Zyv video frame F, not drawn in the figure. Once the first k bit planes of the current Wyner-Zyv frame F have been decoded, the motion estimation and compensation process according to the present invention is applied for the luminance data. In Fig. 1, k is assumed to equal 2 whereas the total number of bit planes that represent the luminance data is assumed to be 8. Thus, as a result of the motion estimation and compensation process, the values for the residual 6 bit planes of the luminance data will be predicted without having to encode, transmit and decode these bit planes. The chrominance data are assumed to follow the weights and prediction locations from the luminance component, but on all bit planes instead of on a subset of residual bit planes. In other words, if it is assumed that the chrominance component of the pixels is also represented by 8 bit planes, the values of these 8 bit planes will be predicted using the weights and prediction locations that are used to predict the 6 residual bit planes of the luminance component for the same pixel.

The motion estimation process according to the present invention is block based. Square shaped blocks O of size B by B are taken from the Wyner-Zyv frame F at positions (i,j) in the frame. Herein, i and j respectively represent integer row and column indexes for pixels in frame F, and B is the integer block size. The block at position (i,j) is denoted by O(i,j) with index i = 0, oc, 2*oc, ..., (rows-1) and j = 0, oc, 2*oc, ..., (columns-1). Herein, oc is a parameter of the block based motion estimation process named the step-size. This step-size can be any integer number between 1 and B.

As is illustrated by Fig. 1, the motion estimation algorithm searches for the best match with block O in reference frames $F^R$. The first bit plane 101, the second bit plane 102 and the residual bit planes 103 of one such reference frame $F^R$ are drawn in Fig. 1. The search for the best matching block $O^{RM}$ or 110 is restricted within a specified search-range SR. Thus, the process compares block O(i,j) with all blocks OR having their origin between positions (i-SR,j-SR) and (i+SR,j+SR) in reference frame $F^R$. This is indicated in Fig. 1 by the dotted line 104 which represents a sample search area in reference frame $F^R$ for a block under consideration in the currently decoded frame F. It is noticed that these origins can be located on an integer grid or a sub-pixel grid in case of sub-pixel motion estimation according to the present invention. Another remark is that when a block partially falls out of the frame boundaries, the frame will be extended at the borders.

In the embodiment illustrated by Fig. 1, bit-error counting is used as the matching criterion to determine the best match $O^{RM}$ in the reference frame $F^R$ for block O in frame F. More precisely, the matching criterion minimizes the bit-error on the first (most significant) k bit planes between O and OR. Although a single reference frame $F^R$ is drawn in Fig. 1, plural reference frames may be considered. These reference frames are one or more previously decoded Wyner-Zyv frames, if there is one, and the key-frames which precede and succeed the current Wyner-Zyv frame F.

After determining the best matching block in reference frame $F^R$, denoted by $O^{RM}$ or 110, in bit-error sense, the candidate residuals of pixels p(i,j) and their weights are determined, as shown in Fig. 1. These residuals are the bpp-k missing bits for every pixel, where bpp is the number of bits used to represent the luminance component of a pixel. In the example illustrated by Fig. 1, bpp equals 8, and bpp-k equals 6.

A pixel in the best matching block $O^{RM}$ is considered a valid pixel, if the k most significant bits from this pixel are identical to the k most significant bits of the corresponding pixel in block O. Although this validity criterion works well, other validity criteria can be considered, in particular of k is greater than 2.
The block weight $W_B$ of the best matching block $O^{RM}$ is defined as the number of valid pixels in $O^{RM}$ over the total number of pixels in $O^{RM}$:

$$W_B = \frac{\sum\limits_{\text{pixels} \in O^{RM}} \text{valid pixels}}{\sum\limits_{\text{pixels} \in O^{RM}} \text{pixels}} \qquad (1)$$

In Fig. 1, the two most significant bit planes 111 and the 6 lest significant bit planes 112 of the best matching block $O^{RM}$ have been drawn. Presumably, applying the bit-error validity criterion on the most significant bit planes 0 (MSB) and 1 has resulted in 6 invalid pixels for block $O^{RM}$. These 6 invalid pixels are dark shaded in Fig. 1 whereas the 58 valid pixels of block $O^{RM}$ are white shaded. The block weight $W_B$ for $O^{RM}$ equals 58/64 or 0.90625.

With every valid pixel of the best matching block $O^{RM}$, a candidate residual pixel value $V_x^{ij}$ and a corresponding weight $W_x^{ij}$ are associated as follows:

$$V_X^{ij} = \sum\limits_{l=k}^{bpp-1} 2^{b_l} \qquad (2)$$

$$W_X^{ij} = W_B \qquad (3)$$

In here $b_l$ equals the corresponding bit-value (0 or 1). In the example of Fig. 1 for instance, the residual pixel value corresponds to the value of the remaining 6 bits of the luminance component of the corresponding pixel, i.e. bits 2 to 7 (LSB) in Fig. 1, and the weight value corresponds to the block weight associated with the best matching block $O^{RM}$ according to formula (1).

The residual pixel values $V_x^{ij}$ and corresponding weights $W_x^{ij}$ are stored in an array of residual pixel values 121 and array of weights 122 for that pixel p(i,j), jointly constituting the pixel prediction array 120 for pixel p(i,j). It is noticed that the sub-index X in $V_x^{ij}$ and $W_x^{ij}$ denotes the location in the residual pixel value/weight array.

It is remarked that the block size B of the blocks that are used in the motion estimation process cannot be too small, since this would compromise the matching fidelity. At a limit where the block size B is chosen to be 1, a good match would be found at many random locations within the search-range considered. On the other hand, the block size B cannot be too large either, as this would compromise the accuracy of the block-based motion-model. In addition, large values of B will raise the complexity and the memory requirements of the process.

After the motion estimation process has been executed for the different blocks in the currently decoded frame F, the residual values and weights arrays for each pixel are known. It is noted that some pixels may have a predictor array which contains no elements. This will be the case when in the motion estimation process none of the matching pixels in the best matching blocks were valid. For these particular pixels some post-processing, reconstructing the luminance component from surrounding pixel values will be required. For all other pixels, different methods of motion compensation are possible to predict the residual value of the luminance component from the values and weights stored in the array, based for instance on binning, clustering of predictors, thresholding, selecting a minimal number of candidate predictors, or a combination of the foregoing. All these motion compensation methods try to minimize the uncertainty on the residual pixel value.

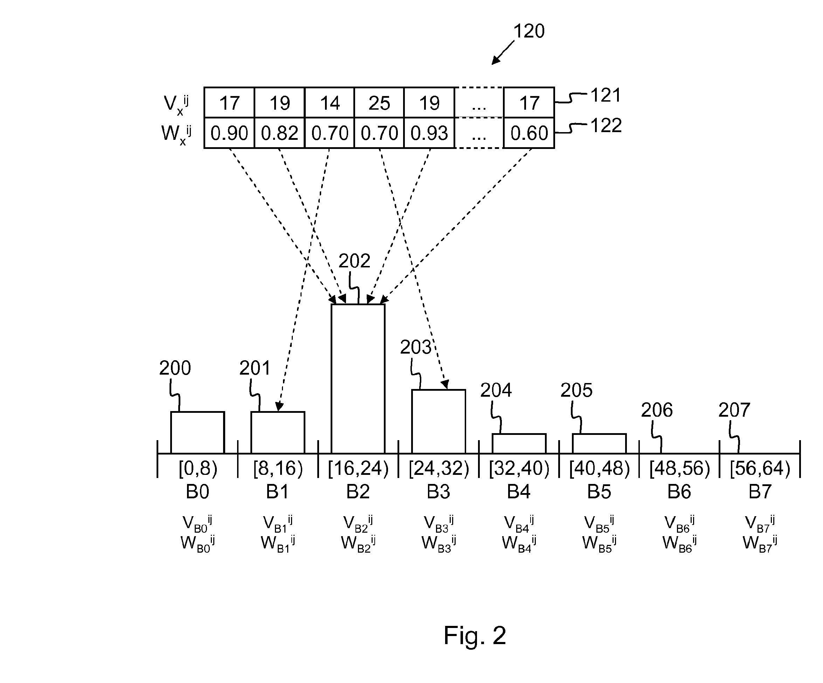

Fig. 2 illustrates an example of motion compensation according to the current invention, based on binning. Motion compensation based on binning tries to maximize the probability of the residual value to fall within certain boundaries. The range of the residual value is typically limited by the representation of the pixel values and the number of residual bits bpp-k. In case of an unsigned 8-bit representation of the pixel's luminance component and k = 2, these lower and upper limits of the range of the residual value are 0 and 63. This range is divided into a set of equally large bins B0, B1 B2, B3, B4, B5, B6 and B7, respectively also denoted 200, 201, 202, 203, 204, 205, 206 and 207 in Fig. 2. In the example with bpp=8 and k=2, the bins B0 ... B7 respectively correspond with the value intervals [0,8), [8,16), [16,24), [24,32), [32,40), [40,48), [48,56) and [56,64). Subsequently, all the values 121 and weights 122 in the residual pixel array 120 are assigned to a bin such that the residual pixel value falls within the bin interval. This is illustrated by the dashed arrows in Fig. 2. For each bin, a bin residual value $V_B^{ij}$ is maintained and a bin weight $W_B^{ij}$ is maintained. For the bins B0 ... B7 in Fig. 2, these bin residual values respectively are denoted $V_{B0}^{ij}$, $V_{B1}^{ij}$, $V_{B2}^{ij}$, $V_{B3}^{ij}$, $V_{B4}^{ij}$, $V_{B5}^{ij}$, $V_{B6}^{ij}$, $V_{B7}^{ij}$ and the bin weights respectively are denoted $W_{B0}^{ij}$, $W_{B1}^{ij}$, $W_{B2}^{ij}$, $W_{B3}^{ij}$, $W_{B4}^{ij}$, $W_{B5}^{ij}$, $W_{B6}^{ij}$, $W_{B7}^{ij}$. When a residual pixel value from the predictor array 120 becomes assigned to a bin, the bin residual value $V_{Bs}^{ij}$ of that bin is increased with $V_X^{ij} * W_X^{ij}$ and the bin weight value $W_{Bs}^{ij}$ of that bin is increased with $W_X^{ij}$. As a result, after allocation of all residual predictors in the array 120, and after weighted averaging, the bin residual values and the bin weight values are given by:

$$V_{Bs}^{ij} = \frac{\sum_{V_X^{ij} \in Bs} W_X^{ij} \cdot V_X^{ij}}{W_{Bs}^{ij}} \qquad (4)$$

$$W_{Bs}^{ij} = \sum_{V_X^{ij} \in Bs} W_X^{ij} \qquad (5)$$

Herein, s represents the index of the bin.

Finally the residual pixel value is chosen to be the bin residual value $V_{Bs}^{IJ}$ of the bin with highest bin weight $W_{Bs}^{IJ}$. In the example of Fig. 2, this is the bin residual value of bin B2 or 202.

In the rare case where multiple bins have the same maximal weight value, their value is again weighted averaged using the bin-values and bin-weights. It is further noted that binning with only one bin comes down to weighted averaging of the entire residual pixel predictor array 120.

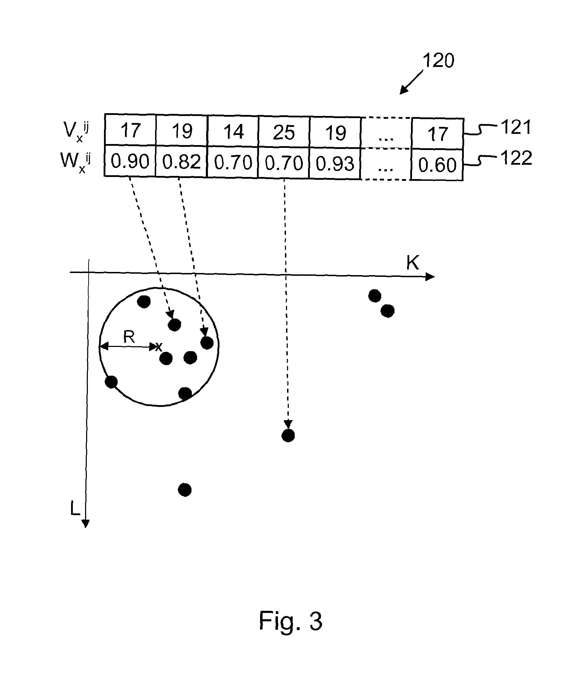

Fig. 3 illustrates motion compensation according to the current invention, based on clustering of predictors. Indeed, the residual pixel predictors tend to concentrate their weights around certain locations in the reference frame (s) $F^R$. This indicates the existence of a virtual centre-of-mass $(k_C, l_C)$. It will be appreciated by the skilled person that the virtual centre-of-mass will be close to the location in the reference frame(s) $F^R$ that corresponds to the real displacement of the pixel under consideration in the moving image. The centre-of-mass can be defined in different ways, out of which two calculation methods can be selected as follows:

$$(k_C, l_C) = (\text{median}(k_X), \text{median}(l_X)) \qquad (6)$$

$$(k_C, l_C) = \left( \frac{\sum_X W_X^{ij} \cdot k_X}{\sum_X W_X}, \frac{\sum_X W_X^{ij} \cdot l_X}{\sum_X W_X} \right) \qquad (7)$$

Where $(k_X, l_X)$ are the coordinates of the pixel from which the residual value $V_X^{ij}$ has been retrieved. An additional weight can be assigned to the candidate residuals based on their distance to the centre-of-mass, which is defined by the weighted position of the candidate pixel residuals. A selection of the residual pixel predictors can then be applied, by considering the valid pixels that fall within a circle with radius R whose centre coincides with the centre-of-mass. The values and weights of the pixels falling within this circle are denoted throughout this patent application with subscript XC. As the centre-of-mass is assumed to be close to the real motion compensated pixel, the weights should be adapted according to the proximity to the centre-of-mass. Additionally, a multiplication factor $\alpha$, with $0 \leq \alpha \leq 1$, indicates the extent to which the original pixel weights can be trusted compared to the proximity weight which is multiplied with $(1-\alpha)$.

At last, the residual pixel value can be calculated as a weighted sum of the valid pixels, combining the original pixel weights and the proximity weights:

$$V_{ij}^{REC} = \frac{1}{W} \cdot \sum_{XC} \left( \alpha \cdot W_{XC}^{ij} + (1-\alpha) \cdot \left( 1 - \frac{\sqrt{(k_{XC} - k_C)^2 + (l_{XC} - l_C)^2}}{R} \right) \right) \cdot V_{XC}^{ij} \qquad (8)$$

with the total weight W being:

$$W = \sum_{XC} \left( \alpha \cdot W_{XC}^{ij} + (1-\alpha) \cdot \left( 1 - \frac{\sqrt{(k_{XC} - k_C)^2 + (l_{XC} - l_C)^2}}{R} \right) \right) \qquad (9)$$

Motion compensation of the residual pixel can be a weighted averaging based on the weights from the residual pixel predictor array 120 and the weights based on the distance to the centre-of-mass. The factor $\alpha$ defines the trust level for the weights from the predictor array 120 while $(1-\alpha)$ defines the trust level for the weights based on the distance to the centre-of-mass.

The center-of-mass can actually be defined for every reference frame $F^R$ and be denoted $(k_C^R, l_C^R)$. The reconstructed pixel residual in $F^R$ is then denoted by $V_{ij}^{REC,R}$ with a total weight of $W^R$. Reconstruction of the final pixel residual is then calculated as follows:

$$V_{ij}^{REC} = \frac{\sum_R W^R \cdot V_{ij}^{REC,R}}{\sum_R W^R} \qquad (10)$$

As an alternative, one can choose to reconstruct the final pixel residual $V_{ij}^{REC}$ as the reconstructed pixel residual in the reference frame with the highest total weight $W^R$.

It is further remarked that one can also opt to reconstruct the residual pixel value $V_{ij}^{REC,R}$ in a reference frame $F^R$ as the value obtained by interpolation at location $(k_C^R, l_C^R)$.

Thresholding implies that an additional selection is applied to the elements in each array of values and weights. A weight threshold T is defined. The value/weight pairs with a weight lower than T are discarded. This is feasible for the weights stored in the array, but also for the additional weights based on the distance to the centre-of-mass when clustering of predictors is applied. Residual pixel predictors with a weight smaller than the threshold T with $0<T<1$, are considered invalid. Thresholding may be followed by binning or clustering to obtain the final residual pixel value.

The value/weight pairs, either taken from the predictor array or resulting from clustering based on the distance to a centre-of-mass may be sorted according to decreasing or increasing order of the weight values. A maximum number M of candidate residuals is then selected as the M candidate residuals with the highest weights. This additional selection is again followed by binning or clustering to obtain the final residual pixel value.

Binning, clustering of predictors, thresholding and selecting a maximum number of candidate predictors can further be combined to make a sub-selection of candidate residual value/weight pairs that will be used to determine the final residual value. For example, one can start by selecting the pixels within a certain radius R around the center-of-mass. Subsequently the resulting array of residual pixel value/weights pairs may be sorted and a maximal number of candidate predictors may be selected. Finally the leftover residual pixel value/weight pairs are used to calculate the residual pixel value using the binning method.

The overlapped block motion estimation and compensation process illustrated by Fig. 1, Fig. 2 and Fig. 3 constructs an array 120 of residual pixel predictors 121 and weights 122. It is possible however that for some pixels in the Wyner-Zyv image, no valid residual pixel predictors have been retained from the reference frames. These pixels have to be reconstructed from the surrounding valid pixels in an additional step of the algorithm.

When median filtering is applied, the pixels which are invalid are reconstructed by taking the median of the surrounding valid pixels. As some pixels may have no valid surrounding pixels, this is a multi-pass technique, which is iterated as long as invalid pixels are left.

As an alternative to the median filtering, an invalid pixel may be reconstructed as the mean of the surrounding valid pixels. Again, this is a multi-pass technique, iteratively executed until no invalid pixels are left.

As an alternative to median filtering or mean filtering for pixels for which no valid candidate residuals are found, candidate residuals can be obtained by relaxing the matching criterion. In other words, alternatively to post-reconstruction of the invalid pixels using their neighbors, the validation criterion can be relaxed for the invalid pixels. Instead of forcing k bits to be correct for a residual pixel to be valid, the process can pretend that only k-q bits are known and select the residual pixel predictors for which the first k-q bits are correct. Herein, q represents an integer value between 0 and k. To prevent overshooting of the final pixel value (i.e. obtaining a reconstructed value which is in error with about a factor two compared to the original value), the motion compensation phase in this case has to reconstruct bpp-k+q bits and not bpp-k bits, even if this means that q bits which are known have to be replaced by incorrect bits after compensation. The motion estimation however has to use all k known bits to calculate the weight of the residual pixel predictors, as this minimizes the uncertainty on the location of the real compensated pixel

An additional weight, besides the one obtained from the predictor array and the one resulting from clustering on the basis of distance to a centre-of-mass, can be assigned. This weight allows all candidate residuals to be considered valid. The weight of a residual pixel predictor then can be defined as a function of:

- the number of errors in the known bits;
- the block matching accuracy;
- the proximity to a virtual center-of-mass; and/or
- the position where an error occurs (e.g. an error on most significant bit or MSB should be penalized more than an error on the 4th bit of a pixel).

The first three weights can be implemented as explained before. The last weighting factor also validates pixels for which not all the known bits are correct, but takes into account the importance of the location of the bit error. This weight is referred to as the invalid pixel weight and it is defined as follows:

$$W_{invalid}^{ij} = \frac{\sum_{m=0}^{k} \delta \cdot 2^{bpp-m}}{\sum_{m=0}^{k} 2^{bpp-m}} \qquad (11)$$

Herein, m is an integer index, $\delta=1$ if the bit is the same and $\delta=0$ if the bit is different. Reconstruction of the residual pixel value can then be based on a function combining all weights. The $\alpha$-factor, $\beta$-factor and $1-\alpha-\beta$ define the level of trust in the different weights. Determining the final residual pixel value is then defined as:

$$V_{ij}^{REC} = \frac{1}{W} \cdot \sum_{XC} \left( \alpha \cdot W_{XC}^{ij} + \beta \cdot W_{invalid}^{ij} + (1-\alpha-\beta) \cdot \left( 1 - \frac{\sqrt{(k_{XC} - k_C)^2 + (l_{XC} - l_C)^2}}{R} \right) \right) \cdot V_{XC}^{ij} \qquad (12)$$

with

$$0 \leq \alpha + \beta \leq 1$$

and with:

$$W = \sum_{XC} \left( \alpha \cdot W_{XC}^{ij} + \beta \cdot W_{invalid}^{ij} + (1 - \alpha - \beta) \cdot \left( 1 - \frac{\sqrt{(k_{XC} - k_c)^2 + (l_{XC} - l_c)^2}}{R} \right) \right) \qquad (13)$$

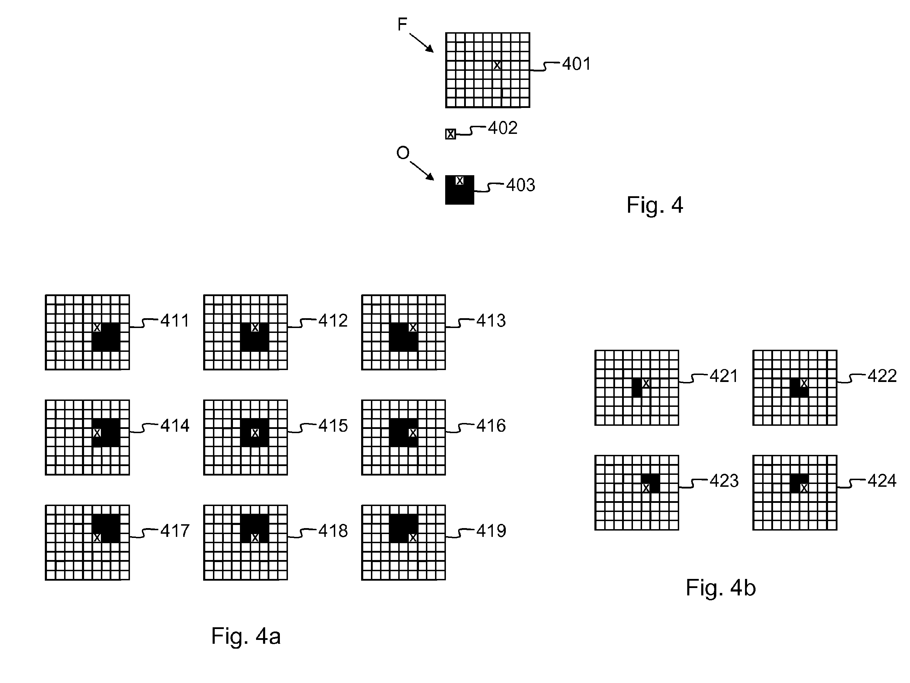

At last, Fig. 4, Fig. 4a and Fig. 4b illustrate by way of example the process according to the present invention applied to the current frame F or 401 for which k bit planes are assumed to be known. The pixel to be estimated in these figures is marked as indicated by 402. A block O overlapping the pixel in the current frame F is marked as is indicated by 403.

In Fig. 4a, the block size B is assumed to be 3. As a result, 9 different blocks O exist in the current frame F that overlap with the pixel 402 to be estimated. These 9 different blocks O are drawn in the copies of frame F named 411, 412, 413, 414, 415, 416, 417, 418 and 419 respectively. The horizontal/vertical search range SR is assumed to be [-1,+1]. For each block O and each reference frame, 81 pixels have to be compared in order to determine the best matching block in that reference frame. As a consequence, 729 pixels have to be compared for the 9 blocks.

In Fig. 4b, the block size is assumed to be 2. This results in 4 different blocks O in the current frame F that overlap with the pixel 402 to be estimated. These 4 blocks O are shown in the copies of frame F denoted by 421, 422, 423 and 424 in Fig. 4b. The horizontal/vertical search range SR is again assumed to be [-1,+1]. For each block O and each reference frame, 36 pixels now have to be compared in order to determine the best matching block in that reference frame. As a consequence, 144 pixels have to be compared for the 4 blocks.

In general, the number of comparisons required to execute the process according to the present invention equals $B^4 \cdot |SR|^2$.

Although the present invention has been illustrated by reference to specific embodiments, it will be apparent to those skilled in the art that the invention is not limited to the details of the foregoing illustrative embodiments, and that the present invention may be embodied with various changes and modifications without departing from the spirit and scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the spirit and scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. It is to be understood that the terms so used are interchangeable under appropriate circumstances and embodiments of the invention are capable of operating according to the present invention in other sequences, or in orientations different from the one(s) described or illustrated above.

**Claims**

1.  A motion estimation and compensation process for at least the luminance component of a pixel in a video frame F, said motion estimation and compensation process comprising the steps of:

    A. comparing an integer number k bit planes for blocks O of pixels including said pixel with blocks OR in at least one reference frame ($F^R$); and
    B. for each block O and each reference frame ($F^R$):

    B1. determining according to a matching criterion a best matching block ($O^{RM}$, 110) in said reference frame ($F^R$);
    B2. determining a weight value ($W_x^{ij}$) for said best matching block ($O^{RM}$) based on the ratio of valid pixels in said best matching block ($O^{RM}$);
    B3. extracting a residual pixel value ($V_x^{ij}$) for said pixel from said best matching block ($O^{RM}$); and

B4. storing said weight value ($W_x{}^{ij}$) and said residual pixel value ($V_x{}^{ij}$) in a pixel prediction array (120); and

C. either of:

C1. motion compensating by determining at least residual bit planes of said luminance component from weight values (122) and residual pixel values (121) in said pixel prediction array (120) in case said pixel is a valid pixel; or
C2. reconstructing said luminance component from surrounding pixel values in case said pixel is an invalid pixel.

2. A motion estimation and compensation process according to claim 1,
**CHARACTERIZED IN THAT** said step of comparing is restricted to blocks within a predefined search range (SR) in said reference frame ($F^R$).

3. A motion estimation and compensation process according to claim 1,
**CHARACTERIZED IN THAT** said matching criterion comprises minimizing the number of bit errors on said integer number k bit planes between said block O in said video frame F and blocks in said reference frame ($F^R$).

4. A motion estimation and compensation process according to claim 1,
**CHARACTERIZED IN THAT** for determining said weight value ($W_x{}^{ij}$), a pixel is considered a valid pixel in case said integer number k of bits in said block O are identical to corresponding pixels in said best matching block ($O^{RM}$).

5. A motion estimation and compensation process according to claim 1,
**CHARACTERIZED IN THAT** for determining said weight value ($W_x{}^{ij}$), a pixel is considered a valid pixel in case at least one bit of said integer number k of bits in said block O is identical to a corresponding pixel in said best matching block ($O^{RM}$).

6. A motion estimation and compensation process according to claim 1,
**CHARACTERIZED IN THAT** said block O and said blocks ($O^{RM}$) in said at least one reference frame ($F^R$) have a square shape with block size B, B representing an integer number of pixels selected as a trade-off between block matching confidence and accuracy of said estimation and compensation process.

7. A motion estimation and compensation process according to claim 1,
**CHARACTERIZED IN THAT** process further comprises:

D. either of:

D1. motion compensating by determining also the chrominance component from weight values (122) and residual pixel values (121) in said pixel prediction array (120) in case said pixel is a valid pixel; or
D2. reconstructing the chrominance component from surrounding pixel values in case said pixel is an invalid pixel.

8. A motion estimation and compensation process according to claim 1,
**CHARACTERIZED IN THAT** said step of motion compensating comprises:

- binning said residual pixel values (121);
- determining bin weight values ($W_{B0}{}^{ij}$, $W_{B1}{}^{ij}$, $W_{B2}{}^{ij}$, $W_{B3}{}^{ij}$, $W_{B4}{}^{ij}$, $W_{B5}{}^{ij}$, $W_{B6}{}^{ij}$, $W_{B7}{}^{ij}$); and
- determining at least said luminance component to be the weighted average of residual pixel values in the bin with highest bin weight value.

9. A motion estimation and compensation process according to claim 1,
**CHARACTERIZED IN THAT** said step of motion compensating comprises:

- clustering of said residual pixel values (121) and associated weight values (122) based on distance to a centre-of-mass.

10. A motion estimation and compensation process according to claim 1,
**CHARACTERIZED IN THAT** said step of motion compensating comprises:

- clustering of said residual pixel values (121) and associated weight values (122) based on distance to a centre-of-mass; and
- binning a selection of said residual pixel values;
- determining bin weight values; and
- determining at least said luminance component to be the weighted average of residual pixel values in the bin with highest bin weight value.

11. A motion estimation and compensation process according to claim 8 or claim 9 or claim 10,
**CHARACTERIZED IN THAT** residual pixel values whose corresponding weight value is smaller than a predefined threshold are not considered for said binning or said clustering.

12. A motion estimation and compensation process according to claim 8 or claim 9 or claim 10,
**CHARACTERIZED IN THAT** residual pixel values are sorted according to decreasing corresponding weight value and only the first M residual values are considered for said binning or said clustering, M being an integer number.

13. A motion estimation and compensation process according to claim 1,
**CHARACTERIZED IN THAT** said step of reconstructing comprises:

- determining said luminance component to be the median of surrounding pixel values.

14. A motion estimation and compensation process according to claim 1,
**CHARACTERIZED IN THAT** said step of reconstructing comprises:

- determining said luminance component to be the mean of surrounding pixel values.

15. A motion estimation and compensation process according to claim 1,
**CHARACTERIZED IN THAT** said at least one frame comprise a first number of video frames and a second number of key frames.

16. A motion estimation and compensation process according to claim 1,
**CHARACTERIZED IN THAT** said bit planes are sub-sampled.

17. A motion estimation and compensation process according to claim 1,
**CHARACTERIZED IN THAT** said integer number of bit planes is adaptable.

18. A motion estimation and compensation process according to claim 1,
**CHARACTERIZED IN THAT** said process is used in one or more of the following:

- video coding;
- distributed video coding;
- error concealment;
- frame interpolation;
- error resilience;
- multiple description coding; and
- predictive coding.

19. A motion estimation and compensation device for at least the luminance component of a pixel in a video frame F, said motion estimation and compensation device comprising:

means for comparing an integer number k of received bit planes for blocks O of pixels including said pixel with blocks OR in at least one reference frame ($F^R$);
means for determining for each block O and each reference frame ($F^R$) according to a matching criterion a best matching block ($O^{RM}$) in said reference frame ($F^R$);
means for determining a weight value ($W_x^{ij}$) for said best matching block ($O^{RM}$) based on the ratio of valid pixels in said best matching block ($O^{RM}$);
means for extracting a residual pixel value ($Vx^{ij}$) for said pixel from said best matching block ($O^{RM}$);
means for storing said weight value ($W_x^{ij}$) and said residual pixel value ($V_x^{ij}$) in a pixel prediction array (120);
motion compensating means for determining at least residual bit planes of said luminance component from weight values (121) and residual pixel values (122) in said pixel prediction array (120) in case said pixel is a valid pixel; and

means for reconstructing said luminance component from surrounding pixel values in case said pixel is an invalid pixel.

Fig. 1

EP 2 061 248 A1

Fig. 2

EP 2 061 248 A1

120

121

122

| $V_x^{ij}$ | 17 | 19 | 14 | 25 | 19 | ... | 17 |
| $W_x^{ij}$ | 0.90 | 0.82 | 0.70 | 0.70 | 0.93 | ... | 0.60 |

K

L

R

x

Fig. 3

Fig. 4

Fig. 4a

Fig. 4b

Europäisches
Patentamt

European
Patent Office

Office européen
des brevets

## EUROPEAN SEARCH REPORT

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 1 806 931 A (BRITISH BROADCASTING CORP [GB]) 11 July 2007 (2007-07-11) <br> * abstract * <br> * paragraphs [0068], [0072], [0145] - [0161], [0324] - [0345]; figure 3 * <br> ----- | 1-19 | INV. <br> H04N7/26 <br> H04N7/36 |
| Y | YOUNG-KI KO ET AL: "New motion estimation algorithm based on bit-plane matching and its VLSI implementation" <br> TENCON 99. PROCEEDINGS OF THE IEEE REGION 10 CONFERENCE CHEJU ISLAND, SOUTH KOREA 15-17 SEPT. 1999, PISCATAWAY, NJ, USA,IEEE, US, <br> vol. 2, 15 September 1999 (1999-09-15), pages 848-851, XP010368428 <br> ISBN: 978-0-7803-5739-6 <br> * abstract * <br> * paragraph [0002]; figure 1 * <br> ----- | 1-19 | |
| A | US 2006/182178 A1 (OI KENJI [JP] ET AL) 17 August 2006 (2006-08-17) <br> * abstract; figures 2,5,6 * <br> * paragraphs [0012], [0070] - [0077], [0085] - [0101] * <br> ----- | | TECHNICAL FIELDS SEARCHED (IPC) <br><br> H04N |
| A | WO 01/39503 A (KONINKL PHILIPS ELECTRONICS NV [NL]) 31 May 2001 (2001-05-31) <br> * abstract; figures 6,9,10 * <br> * page 8, paragraph 2-5 * <br> * page 11, last paragraph - page 12, paragraph 4 * <br> ----- | 1-19 | |
| A | WO 98/43436 A (LEVEL ONE COMMUNICATIONS INC [US]) 1 October 1998 (1998-10-01) <br> * page 5, paragraph 3-LAST * <br> ----- | 1-19 | |

-/--

The present search report has been drawn up for all claims

| Place of search | Date of completion of the search | Examiner |
|---|---|---|
| Munich | 13 November 2008 | Cakiroglu Garton, S |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...........................................................................

& : member of the same patent family, corresponding
document

EPO FORM 1503 03.82 (P04C01)

Europäisches
Patentamt

European
Patent Office

Office européen
des brevets

## EUROPEAN SEARCH REPORT

Application Number

EP 07 12 0604

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | ERTURK S: "Locally refined gray-coded bit-plane matching for block motion estimation" IMAGE AND SIGNAL PROCESSING AND ANALYSIS, 2003. ISPA 2003. PROCEEDINGS OF THE 3RD INTERNATIONAL SYMPOSIUM ON ROME, ITALY SEPT. 18-20, 2003, PISCATAWAY, NJ, USA,IEEE, vol. 1, 18 September 2003 (2003-09-18), pages 128-133, XP010703461 ISBN: 978-953-184-061-3 * the whole document * | 1-19 | |
| A | JIAN FENG ET AL: "Adaptive block matching motion estimation algorithm using bit-plane matching" PROCEEDINGS OF THE INTERNATIONAL CONFERENCE ON IMAGE PROCESSING. (ICIP). WASHINGTON, OCT. 23 - 26, 1995; [PROCEEDINGS OF THE INTERNATIONAL CONFERENCE ON IMAGE PROCESSING. (ICIP)], LOS ALAMITOS, IEEE COMP. SOC. PRESS, US, vol. 3, 23 October 1995 (1995-10-23), pages 496-499, XP010197230 ISBN: 978-0-7803-3122-8 * the whole document * | 1-19 | TECHNICAL FIELDS SEARCHED (IPC) |

The present search report has been drawn up for all claims

| Place of search | Date of completion of the search | Examiner |
|---|---|---|
| Munich | 13 November 2008 | Cakiroglu Garton, S |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

**ANNEX TO THE EUROPEAN SEARCH REPORT
ON EUROPEAN PATENT APPLICATION NO.** EP 07 12 0604

This annex lists the patent family members relating to the patent documents cited in the above-mentioned European search report.
The members are as contained in the European Patent Office EDP file on
The European Patent Office is in no way liable for these particulars which are merely given for the purpose of information.

13-11-2008

| Patent document cited in search report | | Publication date | Patent family member(s) | | Publication date |
|---|---|---|---|---|---|
| EP 1806931 | A | 11-07-2007 | GB 2434050 A | | 11-07-2007 |
| | | | US 2007223582 A1 | | 27-09-2007 |
| US 2006182178 | A1 | 17-08-2006 | JP 2006238431 A | | 07-09-2006 |
| WO 0139503 | A | 31-05-2001 | BR 0007657 A | | 06-11-2001 |
| | | | CN 1355995 A | | 26-06-2002 |
| | | | EP 1151613 A1 | | 07-11-2001 |
| | | | JP 2003515987 T | | 07-05-2003 |
| | | | PL 348970 A1 | | 17-06-2002 |
| | | | RU 2294058 C2 | | 20-02-2007 |
| | | | TR 200102123 T1 | | 21-01-2002 |
| | | | US 6639943 B1 | | 28-10-2003 |
| WO 9843436 | A | 01-10-1998 | AU 6586598 A | | 20-10-1998 |
| | | | CA 2284984 A1 | | 01-10-1998 |
| | | | EP 0970587 A1 | | 12-01-2000 |
| | | | IL 132031 A | | 19-02-2004 |
| | | | US 6041078 A | | 21-03-2000 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **MICHAEL T. ORCHARD ; GARY J. SULLIVAN.** *IEEE Transactions on Image Processing,* September 1994, vol. 3 (5